# EUROPEAN PATENT SPECIFICATION

(11) **EP 2 004 799 B1**
(45) Date of publication and mention of the grant of the patent: **03.03.2010**
(21) Application number: 07709186.6
(22) Date of filing: 31.01.2007
(51) Int. Cl.: C12N 1/00

(54) **PROCESS FOR PRODUCING GRANULAR BIOMASS**
VERFAHREN ZUR HERSTELLUNG VON GRANULÄRER BIOMASSE
PROCÉDÉ DE PRODUCTION DE BIOMASSE GRANULAIRE

(30) Priority: 01.02.2006 EP 06075211
(43) Date of publication of application: 24.12.2008
(73) Proprietor: BIOTHANE SYSTEMS INTERNATIONAL B.V., NL-2623 EW Delft (NL)
(72) Inventor: FRANKIN, Robertus, Johannes, Cilandak Jakarta (ID); DE PIJPER, Marinus, Adrianus, Maria, NL-2531 PJ Den Haag (NL)
(74) Representative: Hatzmann, Martin
(86) International application number: PCT/NL2007/050038
(87) International publication number: WO 2007/089144

(56) References cited:
- WO-A-03/100169
- US-A- 4 720 346
- US-A1- 2002 132 948
- LEGRAND V ET AL: "Deswelling and flocculation of gel networks: application to sludge dewatering" WATER RESEARCH, ELSEVIER, AMSTERDAM, NL, vol. 32, no. 12, December 1998 (1998-12), pages 3662-3672, XP004144622 ISSN: 0043-1354
- TIWARI ET AL: "Enhanced granulation by natural ionic polymer additives in UASB reactor treating low-strength wastewater" WATER RESEARCH, ELSEVIER, AMSTERDAM, NL, vol. 39, no. 16, October 2005 (2005-10), pages 3801-3810, XP005081213 ISSN: 0043-1354

## Description

The invention is in the area of waste water treatment and more in particular in the area of biological waste water treatment,

Biological wastewater treatment uses active bacterial biomass to convert pollutants in effluent and wastewaters. For so called anaerobic biological treatment a consortia of anaerobic bacteria convert pollutants substantially to biogas. In aerobic biological treatment such pollutants are reduced under aerobic conditions to mainly new bacteria (biomass) and heat.

In anaerobic biological treatment the production of new grown biomass is low (typically less then 5 % of COD is converted to new biomass) and therefore the retention of this material in the treatment system is essential to sustain the treatment process. The method of retaining biomass reactors can be done in various ways. The immobilization of biomass to a fixed or mobile carrier is one method to uncouple liquid retention time from biomass retention time. A preferred method is to make use of anaerobic sludge bed technologies like UASB, EGSB and IC reactors. In these reactors granulated biomass is retained by virtue of the good settleability of such biomass and the design of special separators internal to the reactors that can effectively separate and retain such granular biomass.

To date more than 85% of any new industrial applications for high rate anaerobic treatment are based on anaerobic sludge bed technologies (Frankin R.J. (2001). Full scale experiences with anaerobic treatment of industrial wastewater. Wat Sci. Tech., 44(8), 1-6)*.*

Due to the fact that anaerobic biomass growth is slow and the total quantity produced in the system is low, new systems are seeded with granular biomass taken from existing reactor systems. Seeding of new reactor systems with such granular biomass reduces the start up time from several months, or even up to a year, to several weeks only (Zeeuw de W.J.(1984). Acclimatization of anaerobic sludge for UASB reactor start-up. PhD Thesis, Agric. Univ. Wageningen, Holl*and*)*.*

At times there is also a need for reseeding of existing anaerobic reactors, e.g. after a substantial loss of such biomass after plant failure (e.g. overloading or after exposing the biomass to toxic or inhibiting components present in the wastewater during a calamity situation). Also in this case there is a need for (re) introducing of granular seed biomass in the reactor system.

Because of the high demand for granular biomass relative to the supply available, the costs for granular seed biomass are high. Moreover the costs for transportation of this material to the treatment plant to be started or reseeded is prohibitive as the seed biomass can only be collected from existing treatment plants with a dry matter content of 6-8% , hence mainly water is transported over long distance at high costs. At present the granular biomass is considered a commodity and a big dollar business has developed to cater this market.

Over recent years also technologies has developed for aerobic treatment using aerobic granular biomass in the system. Similarly to anaerobic treatment it is advantageous to start up such reactor systems with aerobic granular biomass in order to reduce the start up time required.

The objective of the current invention is to eliminate substantially the cost for procurement and transportation of granular biomass for seeding and reseeding of granular biomass treatment systems.

The basic philosophy is that granular biomass is produced from easily available source raw materials at or near the treatment system where seeding is required.

It is known that granulation of sewage sludge can be enhanced in situ in working granular biomass reactors through the continuous addition of cationic polymer chemicals. However this method requires the long term dosing of such (expensive) chemicals and through the investigated method a reduction of start up time of maximum 20% can be achieved as reported.

It is also known from Kim et al, Process Biochemistry, 40 (2005) pp 89-94, *Facilitated UASB granule formation using organic-inorganic hybrid polymers,* that anaerobic granular biomass can be produced in batch mode on a laboratory scale from anaerobically digested sewage sludge through the addition of polymer chemicals. In this research it was shown that such batch wise produced granular biomass can successfully be used to start up a laboratory UASB reactor. For practical purposes, however, the batch wise production of granular biomass is not viable considering the volume that is required to be handled (typically 10-1000 m³ for commercial scale seeding operations).

Through laboratory and pilot investigations it was now surprisingly found that granular biomass can continuously be produced on a large scale..

The granular biomass can preferably be produced on the same location where the treatment system is to be seeded or reseeded. With the use of this granulator system the need for procurement of expensive granular biomass from existing treatment systems and the transportation of this material to the new reactor has been substantially eliminated. The granulator system can produce granular biomass continuously from various source materials such as digested (anaerobic) sewage sludge for anaerobic applications or activated (aerobic) sludge for aerobic applications.

In addition it is important that the present invention allows for optimization of the properties of the granular biomass obtained by it.

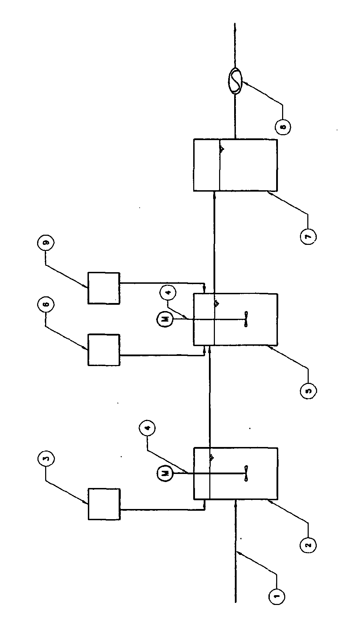

In figure 1 a schematic of the system according to the invention has been given. Raw material (1) is introduced into a first mixing tank (2) in which cationic high molecular weight polymer is introduced (3). A mixer (4) secures the optimal energy input regime for polymer dispersion and granulation to initiate under the flocculation effect of the polymer. The liquid with granules developed in the first mixing tank subsequently overflows into a second mixing tank (5) in which a second polymer is dosed (6). The second polymer is a high molecular weight anionic silica sol which neutralizes the surface charge on the granular biomass produced in the first mixing tank and fixes and stabilizes the granular biomass formed.

Depending on the type of the raw material a third chemical or chemicals of an inert nature (like e.g. kiezelguhr, activated carbon, calcium or other bivalent cations) are dosed to mixing tank (2) to enhance the structure of the granules.

From the second mixing tank the liquid with granules will overflow into a third tank (7) from where it is pumped with a positive displacement pump (8) to the wastewater treatment reactor to be seeded or reseeded.

The invention is based thereon that the optimal product properties and processing conditions are obtained by careful selection of the hydraulic retention time, the energy input during the mixing steps and the type and amounts of polymers and inorganic components added to the mixing steps

It was found that the hydraulic retention time in the mixing tanks (2) and (5) are essential for the production of a good granular biomass. In case the retentione time is too low it was found that polymer dispersion was insufficient and irregular and incomplete granule formation took place. In case the retention time in the mixing tanks is too long however the imposed shear due to mixing causes a very muddy biomass to develop, unsuitable for use as seeding or reseeding material. It has been established in the present invention that a hydraulic retention time in the first mixing tank (2) of 0.5-30 minutes, more preferably 2-7 minutes has to be maintained. Similarly it has been established in the present invention that a hydraulic retention time in the second mixing tank (5) of 0.5-30 minutes, more preferably 2-7 minutes has to be maintained for good granule formation.

Further it has surprisingly been found, that the shear forces imposed on the granulated biomass produced in the first and second mixing steps are extremely critical. In case insufficient mixing forces in the first and second mixing tank are applied the polymer dispersion in these tanks will be insufficient and an irregular and non homogeneous granular biomass will develop. The poor quality of this material will make it unsuitable for use in the reactor to be seeded or reseeded as it will wash out due to poor settling properties. In case however too high mixing forces are applied in the first and second mixing steps the granular biomass will not develop as the extreme shear forces will prevent the formation of a good quality granular biomass. In the present invention the total mix energy introduced in the first mixing tank is in the range of 10-100 KJ/kg dry solids preferably in the range of 20-60 KJ/kg dry solids in order to produce the good quality granular biomass. The total mix energy introduced in the second mixing tank is in the range of,5 -80 KJ/kg dry solids preferably in the range of 10 - 40 KJ/ kg dry solids in order to produce the good quality granular biomass.

A further important parameter for good granule formation in the present invention is the dosing rate of polymer chemicals in mixing tank (2) and (5) respectively. It was found that a polymer dose rate of 10-100 mg per g dry matter of treated raw material, more preferably 40-80 mg per g dry matter of treated raw material in the first mixing tank (2) provides the best quality of granular biomass. In case of lower dosing rate the granulation of raw material is incomplete and an irregular granular biomass with small granule diameter is formed. Overdosing of the chemical has no advantageous effect and will reduce the economic viability of the method. Similarly it was found that a polymer dose rate of 20-200 mg per g dry matter of treated raw material, more preferably 80-150 mg per g dry matter of treated raw material in the second mixing tank (5) provides the good quality of granular biomass. In case of lower dosing rate the granulated material formed in mixing tank (2) is not stabilized and an irregular granular biomass with weak and instable granule is formed. Overdosing of the chemical has no advantageous effect and will reduce the economic viability of the method.

Preferred polymers to be used as cationic polymer for the first mixing tank are selected from the group of cationic polymers such as acrylamide polymers, whereas the anionic polymer for the second mixing tank are preferably selected from the group of inorganic polymers, such as silica sols.

A further important parameter for good granule formation and to enhance and keep the granular structure in the present invention is the dosing of inert chemicals in the second mixing tank (5).

Preferred chemicals to be used are inert organics like kiezelguhr or activated carbon or salts from bivalent anions like calcium or magnesium.

It was found that a dose rate of 1 - 300 mg of these chemicals alone or in combination per g dry matter of treated raw material, more preferably 55 - 165 mg per g dry matter of treated raw material in the second mixing tank (5) provides the good quality of granular biomass.

### Example:

A facility according to figure 1 has been used for continuous production of artificial anaerobic granular biomass.

The active wet volumes of the mixing tanks (2), (5) and (7) are each 0.35 m³_{.}

Digested sewage sludge of 0.8 -3 % dry solids, at a feed rate of 3 - 10 m³/h has been used as raw material to maintain a hydraulic retention time of 2 till 7 minutes in each mixing tank.

Through mixers (4) the energy input to mixing tanks (2) and (5) has been kept in the range of respectively 20 - 60 KJ/kg dry solids and 10-40 KJ/kg dry solids.

The dosing rate of the cationic polymer to mixing tank (2) has been kept at 40 - 80 g / kg dry solids and the dosing rate of the anionic polymer to - mixing tank (5) been kept at 80 - 150 g / kg dry solids.

Further Calcium (as CaC12) at a dosing rate of 50 -150 g Ca/ kg dry solids and powdered activated carbon at a dosing rate of 5 - 15 g activated carbon/ kg dry solids has been added to the second mixing tank (2) to enhance the granular biomass structure.

A good quality granular biomass was developed according to the present invention with a diameter of 1-5 mm. Tests on this granular material were performed to establish the settling properties and it was found that 70% of the granular biomass formed in the present invention settles with a velocity greater then 50 m/h and 50 % settles with a velocity greater then 70 m/h. These are settling properties similar to those found for normally used granular seed biomass.. The granular biomass thus produced was tested to assess the impact on the biological activity and the start-up performance.

It was found that the biological activity had not significantly been reduced (compared to the raw starting material) under the conditions of polymer dosing and mix regime in the device and that the artificial formed granular biomass kept its granular structure during start-up.

As a result the start-up (till full load) could be limited to 4 weeks which is which is similar as for normally used granular seed biomass and only 20% of the time required when non granulated sewage sludge should have been used.

It was therefore concluded that the granular biomass produced in the present invention is very suitable for use in start up and reseeding of granular biomass biological wastewater treatment reactors.

## Claims

1. Process for producing granular biomass suitable for starting up or reseeding of biological treatment systems, which process comprises contacting a suitable flocculent sludge in a first mixing step with at least one cationic polymer, and subsequently contacting the mixture of sludge and cationic polymer thus obtained with at least one anionic polymer in a second mixing step, wherein the process is continuous and a hydraulic retention time in the first mixing step is maintained of 0.5 - 30 minutes, more preferably 2-7 minutes and wherein the hydraulic retention time in the second mixing step is maintained at 0.5 - 30 minutes, more preferably 2-7 minutes.

2. Process according to claim 1, wherein the amount of energy introduced into the mixture in the said first mixing step is between 10-100 KJ/kg dry solids, more preferably in the range of 20 - 60 KJ/kg dry solids , and the amount of energy introduced into the mixture in the said second mixing step is between 5 -80 KJ/kg dry solids, more preferably in the range 10-40 KJ/kg dry solids.

3. Process according to claim 1- 2, wherein anaerobically digested sewage sludge to produce granular biomass for seeding or reseeding an anaerobic treatment reactor or flocculent aerobic activated sludge to produce granular biomass for seeding or reseeding of an aerobic treatment reactor, is used.

4. Process according to claim 1-3, wherein the cationic polymer is dosed in the first mixing step with a rate of 10-100 mg per g of dry, matter of raw material, more preferably 40 -80 mg per g of dry matter of raw material.

5. Process according to claim 1-4, wherein anionic polymer is dosed in the second mixing step with a rate of 20-200 mg per g of dry matter of raw material, more preferably 80 - 150 mg per g of dry matter of raw material.

6. Process according to claim 1-5, wherein the cationic polymer is chosen from the group of acryl-amide polymers

7. Process according to claim 1-6, wherein the anionic polymer is chosen from the group of silica sols.

8. Process according to claim 1-7, wherein a chemical or chemicals of an inert nature (like e.g. kiezelguhr, activated carbon, calcium or other bivalent cations) are dosed alone or in combination to the second mixing step with a rate of 1-300 mg per g of dry matter of raw material, more preferably 55 - 165 mg per g of dry matter of raw material.

9. Process according to claim 1-8, wherein the hydraulic retention time, the energy input, the type and amount of polymers and the type and amount of inert chemicals or bivalent salts are selected so that the particle size of the granular biomass produced is between 0.2 and 5 mm, more preferably between 1 and 3 mm

## Patentansprüche

1. Verfahren zur Herstellung von granulärer Biomasse, die geeignet ist für das Anfahren oder erneute Animpfen von biologischen Aufbereitungssystemen, welches Verfahren umfasst, einen geeigneten flockigen Schlamm in einem ersten Mischschritt mit mindestens einem kationischen Polymer in Kontakt zu bringen und im Folgenden die so erhaltene Mischung aus Schlamm und kationischem Polymer mit zumindest einem anionischen Polymer in einem zweiten Mischschritt in Kontakt zu bringen, wobei das Verfahren kontinuierlich ist, und eine hydraulische Verweilzeit in dem ersten Mischschritt von 0,5 - 30 Minuten, bevorzugter 2 - 7 Minuten, eingehalten wird, und wobei eine hydraulische Verweilzeit in dem zweiten Mischschritt von 0,5 - 30 Minuten, bevorzugter 2 - 7 Minuten, eingehalten wird,

2. Verfahren nach Anspruch 1, wobei die Menge an in die Mischung im ersten Mischschritt eingeleiteter Energie zwischen 10 - 100 KJ/kg Trockenfeststoff beträgt, bevorzugter im Bereich von 20 - 60 KJ/kg Trockenfeststoff, und die Menge an in die Mischung im zweiten Mischschritt eingeleiteter Energie zwischen 5 - 80 KJ/kg Trockenfeststoff beträgt, bevorzugter im Bereich von 10-40 KJ/kg Trockenfeststoff,

3. Verfahren nach Anspruch 1 bis 2, wobei anaerob ausgefaulter Klärschlamm zur Herstellung von granulärer Biomasse zum Animpfen oder erneuten Animpfen eines anaeroben Aufbereitungsreaktors oder flockiger, aerober, aktivierter Schlamm zur Herstellung von granulärer Biomasse zum Animpfen oder erneuten Animpfen eines aeroben Aufbereitungsreaktors verwendet wird,

4. Verfahren nach Anspruch 1 bis 3, wobei das kationische Polymer im ersten Mischschritt in einem Verhältnis von 10 - 100 mg pro g Trockensubstanz des Rohmaterlals dosiert wird, bevorzugter 40 - 80 mg pro g Trockensubstanz des Rohmaterials.

5. Verfahren nach Anspruch 1 bis 4, wobei das anionische Polymer im zweiten Mischschritt in einem Verhältnis von 20 - 200 mg pro g Trockensubstanz des Rohmaterials dosiert wird, bevorzugter 80 - 150 mg pro g Trockensubstanz des Rohrmaterials.

6. Verfahren nach Anspruch 1 bis 5, wobei das kationische Polymer aus der Gruppe der Acrylamidpolymere ausgewählt wird,

7. Verfahren nach Anspruch 1 bis 6, wobei das anionische Polymer Aus der Gruppe der Kleselsäuresole ausgewählt wird,

8. Verfahren nach Anspruch 1 bis 7, wobei eine Chemikalie oder Chemikalien mit inertem Charakter (wie z.B. Kieselgur, Aktivkohle, Calcium oder andere zweiwertige Kationen) dem zweiten Mischschritt alleine oder in Kombination in einem Verhältnis von 1 bis 300 mg pro g Trockensubstanz des Rohmaterials, bevorzugter 55 - 165 mg pro g Trockensubstanz des Rohmaterials, zudosiert werden,

9. Verfahren nach Anspruch 1 bis 8, wobei die hydraulische Verweilzeit, die Energiezufuhr, die Art und Menge an Polymeren und die Art und Menge an inerten Chemikalien oder zweiwertigen Salzen so ausgewählt werden, dass die Partikelgröße der hergestellten granulären Biomasse zwischen 0,2 und 5 mm, bevorzugter zwischen 1 und 3 mm beträgt.

## Revendications

1. Procédé de production de biomasse granulaire propre à démarrer ou réensemencer des systèmes de traitement biologique, ledit procédé comprenant les étapes consistant à mettre en contact, lors d'une première étape de mélangeage, des boues floculeuses adaptées avec au moins un polymère cationique, puis à mettre en contact, lors d'une deuxième étape de mélangeage, le mélange boues/polymère cationique ainsi obtenu avec au moins un polymère anionique, le procédé étant continu et le temps de rétention hydraulique dans la première étape de mélangeage étant de 0,5 à 30 minutes, de préférence de 2 à 7 minutes, et le temps de rétention hydraulique dans la deuxième étape de mélangeage étant de 0,5 à 30 minutes, de préférence de 2 à 7 minutes.

2. Procédé selon la revendication 1, dans lequel la quantité d'énergie introduite dans le mélange lors de la première étape de mélangeage est comprise entre 10 et 100 kJ/kg de matière sèche, de préférence entre 20 et 60 kJ/kg de matière sèche, et la quantité d'énergie introduite dans le mélange lors de la deuxième étape de mélangeage est comprise entre 5 et 80 kJ/kg de matière sèche, de préférence entre 10 et 40 kJ/kg de matière sèche.

3. Procédé selon les revendications 1 et 2, dans lequel on utilise des boues d'épuration digérées en anaérobie pour produire de la biomasse granulaire destinée à ensemencer ou réensemencer un réacteur anaérobie de traitement, ou des boues activées aérobies floculeuses pour produire de la biomasse granulaire destinée à ensemencer ou réensemencer un réacteur aérobie de traitement.

4. Procédé selon les revendications 1 à 3, dans lequel le polymère cationique est ajouté lors de la première étape de mélangeage à raison de 10 à 100 mg par g de matière sèche de matière première, de préférence de 40 à 80 mg par g de matière sèche de matière première.

5. Procédé selon les revendications 1 à 4, dans lequel le polymère anionique est ajouté lors de la deuxième étape de mélangeage à raison de 20 à 200 mg par g de matière sèche de matière première, de préférence de 80 à 150 mg par g de matière sèche de matière première.

6. Procédé selon les revendications 1 à 5, dans lequel le polymère cationique est choisi dans le groupe des polymères d'acrylamide.

7. Procédé selon les revendications 1 à 6, dans lequel le polymère anionique est choisi dans le groupe des sols de silice.

8. Procédé selon les revendications 1 à 7, dans lequel un ou des produit(s) chimique(s) de nature inerte (tels que le kieselguhr, le charbon actif, le calcium ou autres cations bivalents) sont ajoutés, seuls ou en combinaison, lors de la deuxième étape de mélangeage à raison de 1 à 300 mg par g de matière sèche de matière première, de préférence de 55 à 165 mg par g de matière sèche de matière première.

9. Procédé selon les revendications 1 à 8, dans lequel le temps de rétention hydraulique, l'apport en énergie, le type et la quantité de polymères et le type et la quantité de produits chimiques inertes ou de sels bivalents sont sélectionnés de telle sorte que la taille des particules de la biomasse granulaire produite soit comprise entre 0,2 et 5 mm, de préférence entre 1 et 3 mm.
